# EUROPEAN PATENT SPECIFICATION

(11) **EP 1 325 840 B1**
(45) Date of publication and mention of the grant of the patent: **31.08.2005**
(21) Application number: 02029078.9
(22) Date of filing: 30.12.2002
(51) Int. Cl.: B60R 3/00

(54) **A frontal running board for a commercial vehicle**
Fronttrittbrett für ein Nutzfahrzeug
Marchepied frontal pour véhicule commercial

(30) Priority: 04.01.2002 IT TO20020008
(43) Date of publication of application: 09.07.2003
(73) Proprietor: IVECO S.p.A., 10156 Torino (IT)
(72) Inventor: Rolfo, Gian Piero, 10095 Grugliasco (IT)
(74) Representative: Gervasi, Gemma

(56) References cited:
- DE-U- 9 416 113
- FR-A- 2 472 999
- PATENT ABSTRACTS OF JAPAN vol. 1996, no. 10, 31 October 1996 (1996-10-31) & JP 08 156696 A (NISSAN DIESEL MOTOR CO LTD), 18 June 1996 (1996-06-18)
- PATENT ABSTRACTS OF JAPAN vol. 1997, no. 06, 30 June 1997 (1997-06-30) & JP 09 030347 A (MITSUBISHI AUTOMOB ENG CO LTD;MITSUBISHI MOTORS CORP), 4 February 1997 (1997-02-04)

## Description

The present invention relates to a frontal running board for a commercial vehicle.

It is known that the bumpers of commercial vehicles comprise at the front running boards which make it possible to climb on to said bumper with a view to cleaning the windows and for other maintenance operations at the front part of the vehicle.

Frontal running boards are normally formed by a support member formed by a portion of said bumper and by a grid having a non-slip function, generally made of metal and fastened to the support by screw-fastening from the interior of the vehicle's body on which the bumper is mounted. This fastening operation is itself inconvenient and, moreover, prevents the replacement of a single plate in event of it being damaged or becoming worn.

Furthermore, following a collision, the sharp non-deformable surfaces of the metal non-slip plate are not deformed, unlike the bumper, and could create safety problems. FR 2 472 999 discloses a vehicle wherein a plurality of plates form a ruming board, fixed by bolts on the bumper according to the preamble of claim 1. DE 9 416 113 discloses a single-piece running board to be fixed to a bumper of a vehicle.

It is the object of the present invention to devise a frontal running board for a commercial vehicle which does not have the above-described disadvantages, which, in particular, can be produced rapidly, economically and with little impact on the environment, which makes possible easy replacement of the respective non-slip plate, which makes possible rapid and convenient mounting, which does not exhibit safety problems and which facilitates the recycling of the bumper.

According to the present invention, a running board for a vehicle according to claim 1 is provided.

With a view to a better understanding of the present invention a preferred embodiment thereof will be described non-restrictively by way of example below, with reference to the accompanying drawings, in which:
Figure 1 illustrates a front view of a bumper for a commercial vehicle comprising two running boards designed in accordance with the present invention;
Figure 2 is a view from above of one of the running boards in Figure 1;
Figure 3 is a section along the axis III-III of the bumper in Figure 1;
Figure 4 is a cross-section of a clip for fastening a plate for the running board in Figure 2;
Figure 5 is a section along the line V-V in Figure 2; and
Figure 6 is a section along the line VI-VI in Figure 2.

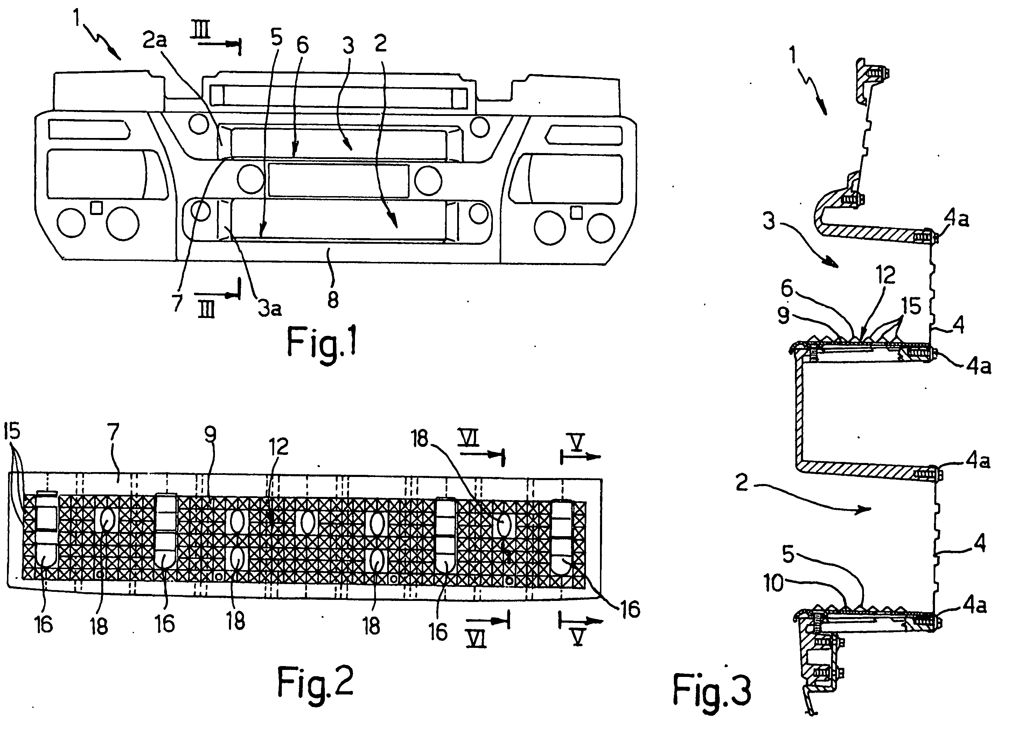

In Figure 1 the reference numeral 1 generally denotes a bumper for a commercial vehicle, comprising a pair of openings 2,3 for the inlet of cooling air into the engine compartment, which openings are provided in the front portion of said bumper and are of approximately rectangular shape.

The openings 2,3 are in each case delimited by respective side walls 2a,3a and by a grille-type end wall 4 which allows air to pass and which is secured to the side walls 2a,3a by means of screws 4a.

The openings 2,3 are delimited at the bottom by respective walls 7,8 which having a supporting function for respective non-slip plates 9,10 which can be fastened thereto by means of a plurality of clips 20 (Figures 2,4 and 5).

According to an important feature of the present invention and as will be explained in the following description, the clips 20 are adapted to allow non-slip plates 9,10 to be mounted frontally on the respective walls 7,8 of the bumper 1 so as to form respective running boards 5,6 to support the foot of an operator who has to perform maintenance operations at the front part of the vehicle.

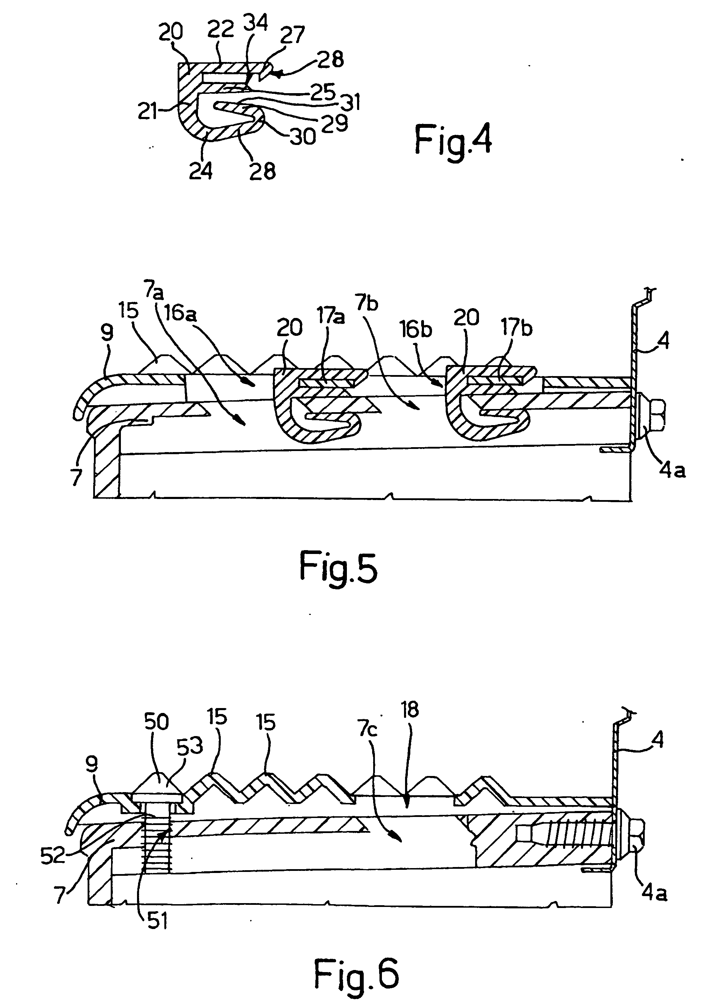

Therefore, each wall 7,8 is of sufficient depth to be able to support the front part of the operator's foot and, as shown in particular in Figures 5 and 6, includes openings 7a,7b to allow the insertion of fastening clips 20 for the non-slip plate 9,10, and openings 7c to allow water to percolate.

In the following reference will be made to a single running board 6, since the other running board forming part of the bumper 1 is similar to the former in structure and dimensions.

As illustrated in particular in Figure 2, the non-slip plate 9 is made of polymeric material, preferably of thermoplastic material, is generally of rectangular shape and has an upper surface 12 formed by a plurality of projections of square-based pyramidal shape situated side by side. Furthermore, on the upper surface 12 there is provided a plurality of approximately rectangular seatings 16 which are available in operation in alignment with respective openings 7a,7b in the wall 7 to allow the insertion of the clips 20, and with ellipsoidal holes 18 which, in operation, are also aligned with openings 7c in the wall 7 to allow water to percolate through said plate 9, as shown in detail in Figures 5 and 6.

In detail, each seating 16 (Figure 5) is of generally rectangular shape and comprises first, second and third openings 16a,16b,16c separated by webs 17a,17b of generally square shape.

As illustrated in detail in Figure 4, each clip 20 comprises a rigid rib 21 which, at a first end thereof, carries a first flexible element 22 perpendicular to said rigid rib 21 and, at a second end, a V-shaped second flexible element 24 which also extends in said direction of the first flexible element 22.

The first flexible element 22 carries at its free end a tooth 27 having an inclined entry surface 28 turned towards the second flexible element 24.

The V-shaped second flexible element 24 comprises a first leg 28 and a second leg 29, which are joined to form the vertex of the V, whereas the rigid rib 21 is joined to the flexible element 24 via the second end of the first leg 28.

Therefore, the second leg 28 is interposed between the first leg 28 and the first flexible element 22 and has an inclined surface 31 turned towards it.

Moreover, between the two flexible elements 22,24 there is provided an intermediate element 25 which is also perpendicular to the rigid rib 21 and which extends from the same side of the rigid rib 21 parallel to the first flexible element 22. The intermediate element 25 has an end entry surface 34 inclined towards the first flexible element 22.

To mount the non-slip plate 9 on the wall 7 so as to form the frontal running board 6, the operation starts with the installation of the clip 20 on the non-slip plate 9. Each clip 20 is inserted from above into the respective opening 16a,16b of each seating 16 and is then shifted parallel to the surface of said plate 9 so that the tooth 27 of the first flexible element 22 of the clip 20 engages beyond the respective web 17a,17b of the seating 16, thereby preventing the clip 20 from becoming disengaged axially from the plate 9. The inclined end surface 34 of the second flexible element 24 facilitates the insertion of the clip 20 into the plate 9.

At this point, the assembly comprising the plate 9 and the clips 20 is introduced from above on to the wall 7 so as to insert the flexible element 24 of each clip 20 into the respective openings 7a,7b until the second flexible element 24 of each clip 20 abuts against a lower surface of said wall 7.

Finally, to prevent axial disengagement of the plate 9 it is necessary to secure it by means of a plurality of pins 50 driven into respective holes 51 in the wall 7.

Each pin 50 has a shank 52 provided with circumferential raised portions and a head 53 in the form of a square pyramid and of similar dimensions to those of the projections 15 of the upper surface 12 of the plate 9.

The advantages which can be achieved with the present invention are apparent from a study of the features of the frontal running boards 5,6 for a commercial vehicle designed in accordance with therewith.

In particular, as is evident from the foregoing description, the running boards 5,6 can be mounted frontally on the bumper 1 in an easy and rapid manner. Furthermore, the special feature of the frontal mounting by means of the clips 20 makes possible easy replacement of a single non-slip plate 9,10 in the event of it being damaged or becoming worn.

Finally, the production of the running boards 5,6 from deformable plastics material obviates any danger in the event of an accident.

Finally, it is evident that the running boards 5,6 for a commercial vehicle illustrated and described above can be subject to modifications and variations.

For example, the form of the plates 9,10 and of their upper surface 12 can be varied.

Moreover, the means for connecting the plates 9,10 to the respective walls 7,8 or the form of the clips 20 can be varied.

## Claims

1. A frontal running board for access to a commercial vehicle, comprising a support structure (7,8) belonging to a bumper (1), a non-slip plate (9,10) and fastening means (20,50) for fastening said non-slip plate (9,10) to said support structure (7,8), **characterised in that** said fastening means (20,50) comprise at least one clip (20), said clip (20) comprising an attachment portion (21,22,25) which can be fastened to said non-slip plate (9,10) and a flexible portion (24) co-operating elastically with said support structure (7,8) so as to clamp said non-slip plate (9,10) to said support structure (7,8).

2. A frontal running board according to claim 1, **characterised in that** said non-slip plate (9,10) is made of polymeric material.

3. A frontal running board according to claim 2, **characterised in that** said polymeric material is a thermoplastic material.

4. A frontal running board according to claim 1, **characterised in that** said flexible portion (24) projects from said non-slip plate (9,10) and **in that** said support structure (7,8) comprises at least one through-opening (7a,7b) for the insertion of said flexible portion (24) of said clip (20)

5. A frontal running board according to any one of the preceding claims, **characterised in that** said fastening means (20,50) further comprise a fastening element (50) adapted to prevent axial displacement of said non-slip plate (9,10) on said support structure (7,8).

6. A frontal running board according to claim 5, **characterised in that** said fastening element is a pin (50).

7. A front bumper for a commercial vehicle, **characterised by** comprising a pair of running boards (5,6) according to any one of the preceding claims.

## Patentansprüche

1. Fronttrittbrett für den Zugang zu einem Nutzfahrzeug, welches umfasst, einen Stützrahmen (7, 8), welcher zu einer Stossstange (1) gehört, eine rutschfeste Auflage (9, 10) und Befestigungshilfsmittel (20, 50), um die genannte rutschfeste Auflage (9, 10) an dem genannten Stützrahmen (7, 8) zu befestigen, **dadurch gekennzeichnet, dass** die genannten Befestigungshilfsmittel (20, 50) mindestens eine Klammer (20) umfassen, wobei die genannte Klammer (20) umfasst, ein Befestigungsteil (21, 22, 25), welches an der genannten rutschfesten Auflage (9, 10) befestigt werden kann, und einen flexiblen Teil (24), welcher elastisch in den genannten Stützrahmen (7, 8) eingreift, um die genannte rutschfeste Auflage (9, 10) an dem genannten Stützrahmen (7, 8) zu befestigen.

2. Fronttrittbrett gemäß Anspruch 1, **dadurch gekennzeichnet, dass** die genannte rutschfeste Auflage (9, 10) aus einem polymeren Werkstoff gefertigt ist.

3. Fronttrittbrett gemäß Anspruch 2, **dadurch gekennzeichnet, dass** der genannte polymere Werkstoff ein thermoplastischer Werkstoff ist.

4. Fronttrittbrett gemäß Anspruch 1, **dadurch gekennzeichnet, dass** der genannte flexible Teil (24) von der genannten rutschfesten Auflage (9, 10) hervorragt und **dadurch**, dass der genannte Stützrahmen (7, 8) mindestens eine durchgehende Öffnung (7a, 7b) umfasst, um das genannte flexible Teil (24) der genannten Klammer (20) einzuführen.

5. Fronttrittbrett gemäß einem der vorherigen Ansprüche, **dadurch gekennzeichnet, dass** die genannten Befestigungshilfsmittel (20, 50) weiter ein Befestigungselement (50) umfassen, welches eingepasst ist, um eine axiale Verschiebung der genannten rutschfesten Auflage (9, 10) auf dem genannten Stützrahmen (7, 8) zu verhindern.

6. Fronttrittbrett gemäß Anspruch 5, **dadurch gekennzeichnet, dass** das genannte Befestigungselement ein Bolzen (50) ist.

7. Vorderstoßstange für ein Nutzfahrzeug, **dadurch gekennzeichnet, dass** sie zwei Trittbretter (5, 6) gemäß einem der vorherigen Ansprüche umfasst.

## Revendications

1. Marchepied frontal pour accéder à un véhicule commercial, comprenant une structure de support (7, 8) faisant partie d'un pare-chocs (1), une plaque anti-glissement (9, 10) et un moyen de fixation pour maintenir ladite plaque anti-glissement (9, 10) sur ladite structure de support (7, 8), **caractérisé en ce que** ledit moyen de fixation (20, 50) comprend au moins une agrafe (20), ladite agrafe (20) comprenant une portion d'attache (21, 22, 25) qui peut être fixée à ladite plaque anti-glissement (9, 10) et une portion flexible (24) coopérant de façon élastique avec ladite structure de support (7, 8) de façon à brider ladite plaque anti-glissement (9, 10) sur ladite structure de support (7, 8).

2. Marchepied frontal selon la revendication 1, **caractérisé en ce que** ladite plaque anti-glissement (9, 10) est faite d'un matériau polymère.

3. Marchepied frontal selon la revendication 2, **caractérisé en ce que** ledit matériau polymère est un matériau thermoplastique.

4. Marchepied frontal selon la revendication 1, **caractérisé en ce que** ladite portion flexible (24) dépasse de ladite plaque anti-glissement (9, 10), et **en ce que** ladite structure de support (7, 8) comprend au moins une ouverture traversante (7a, 7b) pour l'insertion de ladite portion flexible (24) de ladite agrafe (20).

5. Marchepied frontal selon l'une quelconque des revendications précédentes, **caractérisé en ce que** le moyen de fixation (20, 50) comprend de plus un élément de fixation (50) adapté de façon à empêcher un déplacement axial de ladite plaque anti-glissement (9, 10) sur ladite structure de support (7, 8).

6. Marchepied frontal selon la revendication 5, **caractérisé en ce que** ledit élément de fixation est une goupille (50).

7. Pare-chocs avant pour un véhicule commercial, **caractérisé en ce qu'**il comprend une paire de marchepieds (5, 6) selon l'une quelconque des revendications précédentes.
